# EUROPEAN PATENT SPECIFICATION

(11) **EP 1 641 175 B1**
(45) Date of publication and mention of the grant of the patent: **25.07.2012**
(21) Application number: 05270050.7
(22) Date of filing: 07.09.2005
(51) Int. Cl.: H04L 9/12, H04L 9/32

(54) **Receiver and method of receiving an encrypted communication**
Empfänger und Verfahren zum Empfangen von verschlüsselter Kommunikation
Récepteur et procédé pour la réception de communication chiffrée

(30) Priority: 22.09.2004 GB 0421006
(43) Date of publication of application: 29.03.2006
(73) Proprietor: Motorola Solutions, Inc., Schaumburg IL 60196 (US)
(72) Inventor: Pedersen, Kristian Gronkjaer, DK-2600, Glostrup (DK); Kruegel, Christopher A, 60196, Schaumburg (US); Langham, Timothy, 60196, Schaumburg (US); Pappas, Scott James, 60196, Schaumburg (US)
(74) Representative: Treleven, Colin

(56) References cited:
- US-A- 5 060 266
- US-A- 5 243 653
- US-A1- 2002 066 013

## Description

### Field of the invention

The invention relates to a receiver and a method for receiving an encrypted communication and in particular, but not exclusively, to receiving an encrypted communication in a cellular communication system such as a TETRA (TErrestrial Trunked RAdio) cellular communication system.

### Background of the Invention

In a cellular communication system, a geographical region is divided into a number of cells each of which is served by base station. The base stations are interconnected by a fixed network which can communicate data between the base stations. A remote unit is served via a radio communication link by the base station of the cell within which the remote unit is situated.

As a remote unit moves, it may move from the coverage of one base station to the coverage of another, i.e. from one cell to another. As the remote unit moves towards a new base station, it enters a region of overlapping coverage of two base stations and within this overlap region it changes to be supported by the new base station. As the remote unit moves further into the new cell, it continues to be supported by the new base station. This is known as cell reselection or handover.

Communication from a remote unit to a base station is known as uplink, and communication from a base station to a remote unit is known as downlink.

The fixed network interconnecting the base stations is operable to route data between any two base stations, thereby enabling a remote unit in a cell to communicate with a mobile station in any other cell. In addition, the fixed network may comprise gateway functions for interconnecting to external networks such as the Public Switched Telephone Network (PSTN), thereby allowing remote units to communicate with landline telephones and other communication terminals connected by a landline. Furthermore, the fixed network comprises much of the functionality required for managing a conventional cellular communication network including functionality for routing data, admission control, resource allocation, subscriber billing, mobile station authentication etc.

Examples of cellular communication systems include both public cellular communication system such as the Global System for Mobile communication (GSM) and Professional Radio (PMR) systems such as TETRA (TErrestrial Trunked RAdio).

Specifically, although TETRA may be used as a public cellular communication system, it is designed to provide a number of features and services which are particularly suitable for private organisations or groups such as the emergency services.

For example, TETRA provides a number of features and services for managing and controlling group calls as well as for managing the membership of these groups. Other features and services provided by TETRA include, push-to-talk channel allocation, broadcast calls etc. Also, in addition to trunked mode operation wherein remote units communicate via a base station, TETRA provides for the possibility of communication which is communicated directly between remote units. This is known as Direct Mode Operation (DMO) and allows remote units to set up and maintain direct communication between these.

TETRA furthermore provides for a high level of security which may be optimised for specific purposes. For example, calls in TETRA may be end-to-end encrypted in order to prevent eavesdropping or interception of the messages. Such encryption is invaluable for many public services including for example law enforcement organisations.

Aspects of end-to-end encryption mechanisms for TETRA are described in TETRA Memorandum of Understanding (MoU), SFPG (Security and Fraud Prevention Group) Recommendation 02 - End-to-End Encryption. This recommendation fully specifies all that is required for an end-to-end service other than the details of the cryptographic algorithms. These are treated as black-box functions. However, in order to provide a complete solution for the general user, the Recommendation concludes with an appendix showing how these cryptographic functions can be realised using a well known algorithm. Recommendation 02 describes a system of end-to-end encryption management including systems for key management, key selection, key distribution, encryption mode selection, encryption control etc. The framework has been designed to be adaptable to a range of Security Policies, with the flexibility being achieved through a number of simple operational choices.

Other aspects of end-to-end encryption for Tetra are described in ETSI (European Telecommunication Standards Institute) specification EN 302 109. ETSI EN 302 109 specifies a voice encryption and decryption mechanism wherein an encryption function of a transmitting unit generates encrypted data that is communicated to a receiving unit where the inverse operation is performed to regenerate the original data. The encryption and decryption functions are based on key streams generated by a key stream generator at the transmitting unit and receiving unit respectively. In order to have successful decoding, it is essential that the key stream of the receiving unit is synchronised with the key stream of the transmitting unit.

In order to achieve synchronisation between the encryption and decryption functionality, ETSI EN 302 109 specifies the communication of synchronisation values from the transmitter to the receiver. Specifically, a number of synchronisation values are transmitted at the beginning of a call or following cell reselection thereby synchronising the key stream generators. In addition, synchronisation values are sent during the ongoing call in order to allow receiving units missing the initial transmissions of synchronisation values to enter the call later. This is known as late entry. Also, the transmission of synchronisation values during the call allows a receiving unit that looses synchronisation to re-acquire this during the call.

In accordance with the TETRA standards, the synchronisation values may be transmitted in synchronisation messages which may also comprise an encryption key identification and an algorithm identity. Furthermore, a cryptographic checksum may be included which allows the receiving mobile station to determine if the received synchronisation value is valid. A real-time clock may be used by the transmitter when calculating the cryptographic checksum. When receiving the synchronisation message, a remote unit may calculate a local checksum using data from a local real time clock. Accordingly, if the locally calculated checksum matches that of the synchronisation message, the synchronisation value is extracted and used to synchronise the decryption functionality. However, if the locally calculated checksum does not match that of the synchronisation message, the synchronisation message is rejected and not used further. This provides protection against replay attacks as the transmit and receive times for replay messages will differ resulting in a difference in the calculated checksum at the transmitter and receiver.

However, a problem associated with this approach is that it requires all mobile stations to have a real time clock in order to validate the received synchronisation message. For example, in scenarios where a mixed fleet of remote units comprises some remote units which have real-time clocks and some which do not, a synchronisation message from a remote unit without real time clock will appear as a replay attack to a remote unit which does have a real time clock as the cryptographic checksum will fail.

Recommendation 02 describes several security profiles of which some are using the real-time clock for protection against replay attack and others are not. Therefore, it is a likely scenario that there will either be interoperability between different forces using different security profiles or a force may upgrade its security profile to include protection against replay attacks thereby operating a mixed mobile station scenario for at least a temporary period.

Hence, an improved system for encrypted communication would be advantageous and in particular a system providing an improved decryption synchronisation performance, increased flexibility and/or facilitating encryption for mixed remote unit scenarios would be advantageous.

Various methods are known in the prior art for checking the validity of a synchronisation value sent in a synchronisation message and for obtaining synchronisation of the decryption procedure when the received value is not totally valid. Such a method is described for example in US-A-5,060,266. In the method described in that reference, a transmitter provides very frequent updates of a multi-bit counter value used in encryption so that a receiver is able to re-set a counter used in decryption to provide resynchronisation.

### Summary of the Invention

The Invention is concerned with the validity of the synchronisation verification checksum value rather than the synchronisation value.

Accordingly, the Invention seeks to preferably mitigate, alleviate or eliminate one or more of the above mentioned disadvantages singly or in any combination in relation to the validity of the synchronisation verification checksum value.

According to a first aspect of the invention, there is provided a method of receiving an encrypted communication in a receiver of a communication system, the method being as defined in claim 1 of the accompanying claims.

The invention allows improved encryption functionality in a communication system. In particular, the invention may allow an increased flexibility and/or improved operation in a communication system comprising both communication units with real time clocks and communication units without real time clocks. The time base of the receiver may be a real time clock value. The transmit time of the synchronisation message may be associated with a real time clock value of the transmitter of the synchronisation message.

The encrypted communication may for example be an encrypted voice call. The encryption may be end-to-end encryption. The steps of the method may be performed in any order suitable for a specific embodiment. For example, the steps of decrypting the encrypted communication and outputting the decrypted signal may be performed after the steps of receiving a synchronisation message and determining a validity of the verification checksum value.

The method of operation normally includes the decryption process being synchronised in response to the synchronisation value received being valid.

According to an optional feature of the invention, the method may include the known step of synchronising of the decryption process in response to a synchronisation value received in a previous synchronisation message. Such synchronisation may improve encryption synchronisation performance in many scenarios.

According to an optional feature of the invention, the method of operation may comprise the known step of comparing the synchronisation value to an expected synchronisation value and synchronising the decryption process in response to the comparison. This may improve encryption synchronisation performance in many scenarios.

According to an optional feature of the invention, the method of operation may comprise the known step of synchronising the decryption process in response to a flywheel process of the synchronisation value. For example, in a TETRA communication system the method may comprise implementing a synchronisation process as specified in ETSI (European Telecommunication Standards Institute) Technical Specification EN 302 109.

According to the method according to the first aspect of the invention, the fall back mode of operation comprises outputting a fall back mode indication to a user. The fall back mode indication may be an indication that the receiver is operating in the fall back mode. The indication may be an indication alerting the user of the receiver that the communication may not be secure and/or may specifically indicate that the communication may be a replay attack.

According to an optional feature of the invention, the fall back mode indication comprises an audio warning signal. This may be particularly advantageous for audio communications such as voice calls.

According to an optional feature of the invention, the fall back mode of operation comprises a first mode of operation and a second mode of operation, and the method further comprises the step of selecting between the first and second mode of operation. This may allow the operation in case of verification value check failures to be optimised for the current requirements.

According to an optional feature of the invention, the first mode of operation comprises outputting the decrypted signal and the second mode of operation comprises suppressing the decrypted signal. This may allow the operation in case of verification value check failures to be optimised for the current requirements. For example the operation in the fall back mode may depend on the security level of the receiver and/or the communication. For example, in situations where security of the communication is critical, the receiver may suppress the signal whereas in situations where security of the communication is not critical, the receiver may not suppress the signal. The suppression of the signal may for example be an attenuation or a muting of an audio signal.

According to an optional feature of the invention, the first mode of operation comprises outputting a synchronisation error indication and the second mode of operation comprises not outputting a synchronisation error indication. This may allow a selective provision of information of the uncertainty of the synchronisation and/or security of the communication to e.g. a user or external device.

According to an optional feature of the invention, the first mode of operation comprises synchronising the decryption process in response to the synchronisation value and the second mode of operation comprises not synchronising the decryption process in response to the synchronisation value. This may allow for the synchronisation operation of the receiver to be optimised for the current conditions and/or preferences.

According to an optional feature of the invention, the step of selecting comprises selecting between the first and second mode of operation in response to a characteristic of the encrypted communication. This may allow the operation in case of a verification value error to be dependent on the communication. For example, different operation may be achieved depending on the security level associated with the communication.

According to an optional feature of the invention, the characteristic of the encrypted communication is an identity of a transmitter of the encrypted communication. This provides a suitable characteristic for selection of the mode of operation. For example, if the identity corresponds to a transmitter known to comprise a real time clock the operational mode suppressing the signal may be selected whereas if the identity corresponds to a transmitter known not to comprise a real time clock the operational mode not suppressing the signal may be selected.

According to an optional feature of the invention, the characteristic of the encrypted communication is a call group associated with the encrypted communication. Typically security and encryption communication characteristics are selected for a given talk group and this may provide for an efficient control of the fall back operation. For example, if the talk group is associated with a high level of security, the operational mode suppressing the signal may be selected whereas if the talk group is not associated with a high level of security, the operational mode not suppressing the signal may be selected.

According to an optional feature of the invention, the synchronisation message further comprises a decryption key parameter and the fall back mode of operation comprises the step of determining a decryption key for the decryption process in response to a decryption key parameter received in a previous synchronisation message. This may provide improved encryption/decryption operation. In particular, the receiver may operate a flywheel process on the decryption key parameter.

According to an optional feature of the invention, the synchronisation message further comprises a decryption algorithm parameter and the method comprises the step of determining a decryption algorithm for the decryption process in response to a decryption algorithm parameter received in a previous synchronisation message. This may provide improved encryption/decryption operation. In particular, the receiver may operate a flywheel process on the decryption algorithm parameter.

The communication system may be a TETRA cellular communication system.

According to a second aspect of the invention, there is provided a receiver for a communication system, the receiver being as defined in claim 20 of the accompanying claims.

These and other aspects, features and advantages of the invention will be apparent from and elucidated with reference to the embodiment(s) described hereinafter.

### Brief Description of the Drawings

An embodiment of the invention will be described, by way of example only, with reference to the drawings, in which
FIG. 1 illustrates a system for communicating an encrypted call in accordance with an embodiment of the invention; and
FIG. 2 illustrates a flow chart of a method of receiving an encrypted call in accordance with an embodiment of the invention.

### Detailed Description of Embodiments of the Invention

The following description focuses on an embodiment of the invention applicable to a TETRA cellular communication system, i.e. one which operates in accordance with TETRA standards as defined by ETSI (European Telecommunications Standards Institute). However, it will be appreciated that the invention is not limited to this application but may be applied to many other communication systems. For brevity and clarity, the embodiments are described with reference to a voice call but in other embodiments other communication types may be supported such as for example a data call. The transmitter may specifically be part of a first remote unit (such as a mobile station or subscriber terminal) and the receiver may specifically be part of a second remote unit.

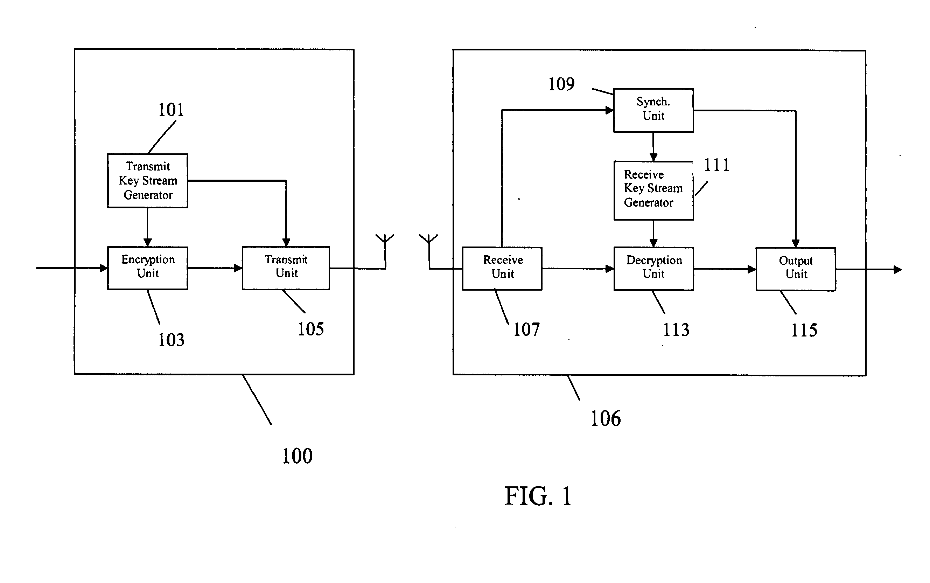

FIG. 1 illustrates a system for communicating an encrypted call in accordance with an embodiment of the invention.

A transmitter 100 comprises a transmit key stream generator 101 which generates a key stream used for encrypting a message. The transmit key stream generator 101 is initialised with an initialisation value that is time varying and not known externally to the transmitter. The transmit key stream generator 101 is coupled to an encryption unit 103 which receives voice data to be transmitted and encrypts this in accordance with a suitable encryption function. In particular, the encryption function combines the voice data with the key stream to generate encrypted audio data.

The transmitter further comprises a transmit unit 105 coupled to the transmit key stream generator 101 and the encryption unit 103. The transmit unit 105 receives the encrypted data from the encryption unit 103 and transmits this over the air interface. In addition, the transmit unit 105 receives encryption synchronisation values from the transmit key stream generator 101 and includes these in the transmitted bit stream. The synchronisation values allow the receiver to synchronise the decryption to the received encrypted data stream.

The synchronisation values are transmitted as encryption synchronisation messages by half-slot stealing wherein a user data transmission is partly or fully replaced by the encryption synchronisation message. In TETRA, the encryption synchronisation message is transmitted by replacing audio data in a full or a half time slot. Thus the transmit unit 105 is operable to replace the encrypted user data by synchronisation value data from the transmit key stream generator 101.

In addition to a synchronisation value, the synchronisation message of the embodiment of FIG. 1 also comprises an encryption key parameter and an encryption algorithm parameter indication of the used encryption key and encryption algorithm respectively. Furthermore, the synchronisation message comprises a verification value in the form of a checksum value which is calculated in response to the other data of the synchronisation message. If the transmitter 100 comprises a real time clock the checksum is furthermore calculated in response to the real time clock such that the value of the checksum depends on the time of transmission of the synchronisation message.

A receiver 106 (e.g. of a fixed or mobile station) comprises a receive unit 107 which receives the data stream transmitted by the transmit unit 105. The transmitter 100 and receiver 106 further comprise the functionality required or desired for communicating over the TETRA air interface including modulators, amplifiers, control circuitry etc as is well known to the person skilled in the art.

The receive unit 107 is coupled to a synchronisation unit 109 and is operable to extract the synchronisation values and to feed these to the synchronisation unit 109. In response, the synchronisation unit 109 generates initialisation values for a receive key stream generator 111. Based on the initialisation values, the receive key stream generator 111 generates a key stream which is synchronised with the key stream of the transmitter. The receive key stream generator 111 is coupled to a decryption unit 113 which is further coupled to the receiving unit 107. The decryption unit 113 receives the encrypted audio and the key stream which is synchronised with the encrypted audio. Accordingly, it performs the inverse function of the function of the encryption unit 103 thereby generating a decrypted signal. The decrypted signal is fed to an output unit which outputs the received signal. In the specific embodiment, the output unit 115 performs audio decoding and feeds the decoder to a speaker (not shown).

In order to provide initial synchronisation of the receive key stream generator 111, the transmitter transmits synchronisation values in connection with setting up of an encrypted call. In addition, synchronisation values are transmitted at intervals throughout the call. This ensures that a receiver that looses synchronisation may reestablish this thereby enabling it to continue the call. Furthermore, the continued transmission of synchronisation values allows a receiver to join the call after this has been setup. This is known as late entry.

In order to guarantee that the synchronisation value received in the synchronisation message is valid, the synchronisation unit 109 determines a local checksum and compares this to the message checksum. If the checksums match, the synchronisation value is considered to be valid and is used to synchronise the receive key stream generator 111. However, if the checksums do not match, the entire synchronisation message is in conventional arrangements rejected, the synchronisation value is discarded and the output signal is muted.

However, as the checksums may depend on the real time clocks of the transmitter 100 and the receiver 106, this approach requires that all remote units either comprise a real time clock and use this in the generation of the checksums or that all remote units generate the checksums without considering real time values. However, this approach is highly unsuitable for situations where a mix of remote stations may exist. This situation is highly likely and therefore the conventional approach results in serious disadvantages in some cases. For example, if a synchronisation message is received from a remote unit which does not comprise a real time clock, a receiving remote unit with a real time clock will calculate a checksum taking into account its local real time clock value. Accordingly, the received message will appear as a replay attack and the synchronisation message will be discarded.

In accordance with the exemplary embodiment of FIG. 1, the synchronisation unit 109 calculates a local checksum for a received synchronisation message using a real time clock value. The local checksum is compared with the checksum of the received synchronisation message and if the checksums match, the synchronisation value is used to synchronise the receive key stream generator 111. However, in contrast to conventional systems, if the checksums do not match the receiver does not stop decryption and mute the output signal. Rather, the receiver 106 enters a fall back mode of operation while continuing the decryption and outputting of the decrypted signal. Thus, even if the checksums do not match, the received signal is presented to a user thus allowing the communication to continue and allowing signals to be received from communication units not comprising a real time clock.

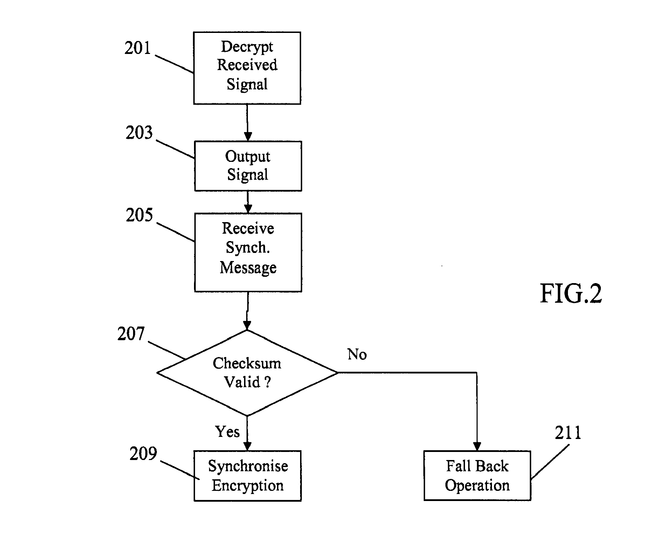

FIG. 2 illustrates a flow chart of a method of receiving an encrypted call in accordance with an embodiment of the invention. The method is applicable to the system illustrated in FIG. 1 and will be described with reference to this.

In step 201, the receiver receives an encrypted voice call which is decrypted to generate a decrypted voice signal.

Step 201 is followed by step 203 wherein the decrypted voice signal is output by the output unit 115.

Step 203 is followed by step 205 wherein a synchronisation message is received. The synchronisation message is in the present embodiment received as a message transmitted by U-plane stealing, i.e. by replacing voice data in the transmitted signal. The received synchronisation message comprises a verification value in the form of a checksum. As described previously, the checksum may or may not be determined in response to a real time clock value of the transmitter.

Step 205 is followed by step 207 wherein the validity of the checksum of the synchronisation message is determined by the synchronisation unit 109. In particular, the synchronisation unit 109 determines a local checksum in response to a real time clock of the receiver 106. If the checksums match the synchronisation message is considered valid and if the checksums do not match the synchronisation message is considered not to be valid.

If the synchronisation message is considered valid the method continues in step 209 wherein the decryption process continues to be synchronised in response to the synchronisation value. In particular, the synchronisation value of the synchronisation message is loaded into the receive key stream generator 111. The method may then continue in step 201 by receiving further encrypted voice data.

If the synchronisation message is considered not to be valid, step 207 is instead followed by step 211 wherein the receiver enters a fall back mode of operation. The operation of the receiver in the fall back mode of operation may depend on the preferences and requirements of the individual application and embodiment. However, in the fall back mode, the receiver continues to decrypt the received communication and to output the decrypted signal in contrast to the specific provision of Recommendation 02. Thus, the received voice call is still decrypted and outputted despite the synchronisation message being considered invalid.

It will be appreciated that the receiver 106 may exit from the fall back mode (and for example return to step 201) in accordance with any suitable criterion such as for example when receiving a synchronisation message for which the checksums match.

The described method allows the receiver to decrypt and output calls received both from transmitters comprising a real time clock and from transmitters not comprising a real time clock value. Thus, the embodiment improves performance in communication systems supporting a mixed population of remote units.

It will be appreciated that different algorithms for encryption synchronisation may be applied in the fall back mode of operation.

In some embodiments, the method of operation comprises synchronising the decryption process in response to the correct synchronisation value. Hence, in contrast to Recommendation 02, the synchronisation value of a synchronisation message having an invalid checksum value is still loaded into the receive key stream generator 111. Accordingly, in situations where the checksum value failure is due to the absence of a real time clock at the transmitter, the decryption process may still be synchronised to the synchronisation values of the synchronisation messages.

In some embodiments, the method of operation comprises synchronising the decryption process in response to a synchronisation value received in a previous synchronisation message. For example, if a previous synchronisation message was considered to have a valid synchronisation value this may be used for synchronising the decryption. Hence, if the decryption process is already synchronised, the current synchronisation value, which may be received in error, will not be used for synchronisation. Hence, the encrypted communication is still decrypted and output in the fall back mode of operation but without the risk of an erroneously received synchronisation value causing a loss of synchronisation by being loaded into the receive key stream generator 111.

In some embodiments, the method of operation comprises comparing the synchronisation value to an expected synchronisation value and synchronising the decryption process in response to the comparison. For example, if the received synchronisation value is sufficiently close to an expected value (in accordance with any suitable criteria), it is likely that the synchronisation value is valid and it may be used to provide a fine adjustment of the synchronisation of the decryption process. However, if the received synchronisation value deviates substantially from the synchronisation value expected from the current decryption synchronisation, it is likely that the new synchronisation value is received in error and it may therefore be discarded.

In some embodiments, the method of operation comprises synchronising the decryption process in response to a flywheel process for the synchronisation value. In particular, various flywheel algorithms using one or more of the above described approaches may be used. Specifically, the method of operation may comprise synchronising the decryption process in accordance with the synchronisation process of ETSI (European Telecommunication Standards Institute) Technical Specification EN 302 109 v1.1.1. Thus, the flywheeling process of ETSI EN 302 109 v1.1.1 may be used to mitigate MAC falsing as the cryptographic checksum does not provide any additional protection.

In some embodiments, the decryption key and/or the decryption algorithm may also be determined in response to a decryption key parameter and/or decryption algorithm parameter of a previous synchronisation message. In particular, if the decryption identity or algorithm identity of the synchronisation messages change during a call (with cryptographic checksum failures) without any indication in the control plane (C-plane), the receiver may apply a flywheel process on these parameters. This flywheel process may use the internally generated synchronisation value and the original key identity and algorithm identity.

A fall back mode indication is generated by the receiver when operating in the fall back mode. For example, when the receiver enters the fall back mode, an icon may be presented on a display of the remote unit indicating that the receiver is now in the fall back mode. As another example particularly suited for an audio call, an audio warning signal may be generated. In this example, the decrypted audio signal may be output but combined with a warning signal that indicates that a checksum error has occurred, and thus that the received signal may possibly be a replay attack. This will allow a user to receive an encrypted call while alerting the user if the call is potentially not a genuine call.

In some embodiments, the receiver is operable to operate in different modes when in the fall back mode of operation. The receiver may in some such embodiments select one of the different modes as the current mode of operation. The operation may for example be selected manually by a user of the remote unit by configuring the remote unit for a given security profile or level. The different modes may allow a customisation of the fall back mode to suit the current conditions and preferences and in particular to suit the currently preferred security level.

In some embodiments, the fall back mode may comprise one mode wherein the decrypted signal is output and one mode where the decrypted signal is suppressed. For example, for a voice call, a selection may be made between a mode wherein the received signal is muted if a checksum error occurs and a mode wherein the received signal is still output if a checksum error occurs.

In some embodiments, the fall back mode may comprise one mode wherein a synchronisation error indication is output and one mode where no synchronisation error indication is output. For example, for a voice call, a selection may be made between a mode wherein the received signal is decrypted and output without informing the user that a checksum error has occurred and a mode wherein the received signal is still output but with an audio warning signal indicating that a checksum error has occurred.

In some embodiments, the fall back mode may comprise one mode wherein the decryption process is synchronised in response to the synchronisation value of a synchronisation message with checksum errors and a mode wherein the synchronisation process is not synchronised to a synchronisation value of a synchronisation message with checksum errors. Hence, a selection may be made of the most appropriate synchronisation process for the current preferences and requirements.

It will be appreciated that in some embodiments, a number of different modes may be available offering various combinations of possible operation settings. For example, the receiver may implement the following options for the operation in the fall back mode for a voice call:
- The signal is muted thereby providing protection against replay.
- The signal is not muted thereby not providing protection against replay but allowing interoperability with other communication units regardless of whether these comprise a real time clock or not.
- The signal is not muted thereby not providing protection against replay but allowing interoperability with other communication units regardless of whether these comprise a real time clock or not. However, an alert tone is output indicating to the user that the received signal may possibly be a replay attack.

Any suitable method or criterion for selecting between the different modes may be used. For example, the selection may be made manually by a user either directly by selecting the preferred mode of operation or indirectly for example by selecting a desired security level.

In some embodiments, the selection of operation in the fall back mode may be in response to a characteristic of the signal being received. For example, the operational mode may be selected depending on an identity of the transmitter. The identity may be an individual identity or may be a group identity. For example, it may be known that some specific remote units are used by users for noncritical communication and if the communication is received from these remote units, the decrypted signal may be output whether checksum failures occur or not. Similarly, it may be known that some specific remote units are used for critical communications and if the communication is received from these remote units, the decrypted signal may be output whether checksum failures occur or not, but with a clear warning signal if checksum errors have occurred.

In some embodiments, the operational mode may be selected in response to a call group or talk group associated with the communication. In some communication systems, such as TETRA, each talk group has an associated security profile. Therefore, for talk groups which have a high degree of security, a fall back mode of operation may be used which provides protection against replay attacks. However, if the communication is associated with a talk group having a low level of security, a fall back mode of operation may be used which simply outputs the signal regardless of any checksum failures.

It will be appreciated that the above description for clarity has described embodiments of the invention with reference to different functional units and processors. However, it will be apparent that any suitable distribution of functionality between different functional units or processors may be used without detracting from the invention. Hence, references to specific functional units are only to be seen as references to suitable means for providing the described functionality rather than indicative of a strict logical or physical structure or organization.

The invention can be implemented in any suitable form including hardware, software, firmware or any combination of these. However, preferably, the invention is implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units and processors.

Although the present invention has been described in connection with some embodiments, it is not intended to be limited to the specific form set forth herein. Rather, the scope of the present invention is limited only by the accompanying claims. Additionally, although a feature may appear to be described in connection with a particular embodiment, one skilled in the art would recognize that various features of the described embodiments may be combined in accordance with the invention. In the claims, the term comprising does not exclude the presence of other elements or steps. Furthermore, although individually listed, a plurality of means, elements or method steps may be implemented by e.g. a single unit or processor. Additionally, although individual features may be included in different claims, these may possibly be advantageously combined, and the inclusion in different claims does not imply that a combination of features is not feasible and/or advantageous. In addition, singular references do not exclude a plurality. Thus references to "a", "an", "first", "second" etc do not preclude a plurality.

## Claims

1. A method of receiving an encrypted communication in a receiver of a communication system, the method comprising the steps of:
receiving an encrypted communication to be decrypted;
receiving (205) a synchronisation message comprising a synchronisation value to enable a decryption process to be synchronised with an encryption process which has been used to encrypt the communication, and a synchronisation verification checksum value;
decrypting (201) the encrypted communication in accordance with a decryption process using the synchronisation value to generate a decrypted signal;
outputting (203) the decrypted signal;
obtaining from the synchronisation message the synchronisation verification checksum value, said checksum value being dependent on the synchronisation message and optionally being dependent on a transmit time of the synchronisation message; and
calculating a local checksum value for the received synchronisation message using a real time clock of the receiver and comparing (207) this value to the obtained synchronisation verification checksum value to determine if a match is obtained; and **characterised by**:
if no checksum match is obtained entering (211) a fall back mode of operation wherein the decryption process is continued and the outputting of the decrypted signal is continued substantially without disruption and an indication is generated by the receiver and provided to a user that the receiver is in fallback mode.

2. A method according to claim 1 wherein the indication alerts the user of the receiver that the communication may not be secure or may indicate that the communication may be a replay attack.

3. A method according to claim 1 wherein the synchronisation verification checksum value is obtained by calculation from data of the synchronisation message.

4. The method claimed in any one of claims 1 to 3 wherein the method includes one of the following steps: (i) synchronising the decryption process in response to the synchronisation value received in the synchronisation message; (ii) synchronising the decryption process in response to a synchronisation value received in a previous synchronisation message; (iii) comparing the synchronisation value to an expected synchronisation value and synchronising the decryption process in response to the comparison; and (iv) synchronising the decryption process in response to a flywheel process of the synchronisation value.

5. The method as claimed in any one of the preceding claims wherein the fallback mode indication comprises an audio warning signal.

6. The method as claimed in any one of the preceding claims wherein the fallback mode indicator is provided on a display of a communication unit in which the receiver is included.

7. The method as claimed in any previous claim wherein the fall back mode of operation comprises a first mode of operation and a second mode of operation, and the method further comprises the step of a user selecting between the first and second mode of operation.

8. The method as claimed in claim 7 wherein the first mode of operation comprises outputting the decrypted signal and the second mode of operation comprises suppressing the decrypted signal.

9. The method as claimed in claim 7 or 8 wherein the first mode of operation comprises outputting a synchronisation error indication and the second mode of operation comprises not outputting a synchronisation error indication.

10. The method as claimed in any one of claims 7 to 9 wherein the first mode of operation comprises synchronising the decryption process in response to the synchronisation value and the second mode of operation comprises not synchronising the decryption process in response to the synchronisation value.

11. The method as claimed in any one of claims 7 to 10 wherein the step of selecting comprises selecting between the first and second mode of operation in response to a characteristic of the encrypted communication.

12. The method as claimed in claim 11 wherein the characteristic of the encrypted communication is an identity of a transmitter of the encrypted communication.

13. The method as claimed in claim 11 wherein the characteristic of the encrypted communication is a call group associated with the encrypted communication.

14. The method as claimed in any one preceding claim wherein the synchronisation message further comprises a decryption key parameter and the method comprises the step of determining a decryption key for the decryption process in response to a decryption key parameter received in a previous synchronisation message.

15. The method as claimed in any one preceding claim wherein the synchronisation message further comprises a decryption algorithm parameter and the method comprises the step of determining a decryption algorithm for the decryption process in response to a decryption algorithm parameter received in a previous synchronisation message.

16. The method claimed in any previous claim wherein the communication system is a cellular communication system operating in accordance with TETRA standards.

17. The method claimed in claim 16 which comprises synchronising the decryption process in accordance with a synchronisation process of ETSI (European Telecommunication Standards Institute) Technical Specification EN 302 109 v1.1.1.

18. A receiver (106) for a communication system, the receiver comprising:
receiving means (107) for receiving an encrypted communication;
means for receiving (107, 109) a synchronisation message comprising data including a synchronisation values and a synchronisation verification checksum value ;
means for decrypting (113) the received encrypted communication in accordance with a decryption process using the synchronisation value to generate a decrypted signal;
means for outputting (115) the decrypted signal;
means for obtaining from the synchronisation message the synchronisation verification checksum value, said checksum value being dependent on the synchronisation message and optionally dependent on transmit time of transmission of the synchronisation message;
means for calculating (106) a local checksum for the received synchronisation message using a real time clock of the receiver; and
means for comparing (106) the local checksum to the obtained synchronisation verification checksum value to determine if a match is obtained;
and **characterised in that**:
the receiver (106) is operable, if no checksum match is obtained, to enter a fall back mode of operation wherein the decryption process is continued and the outputting of the decrypted signal is continued substantially without disruption to generate and to provide an indication to a user that the receiver is in fallback mode.

## Patentansprüche

1. Verfahren zum Empfangen einer verschlüsselten Mitteilung in einem Empfänger eines Kommunikationssystems, wobei das Verfahren die folgenden Schritte aufweist:
Empfangen einer zu entschlüsselnden verschlüsselten Mitteilung;
Empfangen (205) einer Synchronisierungsnachricht mit einem Synchronisierungswert, um den Entschlüsselungsprozess zu befähigen, mit einem Verschlüsselungsprozess synchronisiert zu werden, der verwendet wurde, um die Mitteilung zu verschlüsseln, sowie eines Synchronisierungsverifizierungs-Prüfsummenwertes;
Entschlüsseln (201) der verschlüsselten Mitteilung gemäß einem Entschlüsselungsprozess, wobei der Synchronisierungswert verwendet wird, um ein entschlüsseltes Signal zu erzeugen;
Ausgeben (203) des entschlüsselten Signals;
Erhalten des Synchronisierungsverifizierungs-Prüfsummenwertes von der Synchronisierungsnachricht, wobei der Prüfsummenwert von der Synchronisierungsnachricht abhängt und optional von einer Sendezeit der Synchronisierungsnachricht abhängt; und
Berechnen eines lokalen Prüfsummenwertes für die empfangene Synchronisierungsnachricht unter Verwendung eines Echtzeittaktes des Empfängers und Vergleichen (207) dieses Wertes mit dem erhaltenen Synchronisierungsverifizierungs-Prüfsummenwertes, um festzustellen, ob eine Übereinstimmung vorliegt; **gekennzeichnet durch**:
wenn keine Prüfsummenübereinstimmung erhalten wird, Eintreten (211) in eine Ersatzbetriebsart, wobei der Verschlüsselungsprozess fortgesetzt wird und das Ausgeben des entschlüsselten Signals im Wesentlichen ohne Unterbrechung fortgesetzt wird sowie eine Anzeige von dem Empfänger erzeugt und einem Nutzer zur Verfügung gestellt wird, wonach sich der Empfänger in der Ersatzbetriebsart befindet.

2. Verfahren nach Anspruch 1, wobei die Anzeige den Nutzer des Empfängers darüber alarmiert, dass die Mitteilung möglicherweise nicht sicher ist oder anzeigen könnte, dass die Mitteilung ein Replay-Angriff sein könnte.

3. Verfahren nach Anspruch 1, wobei der Synchronisationsverifizierungs-Prüfsummenwert durch Berechnung von Daten der Synchronisationsnachricht erhalten wird.

4. Verfahren nach einem der Ansprüche 1 bis 3, wobei das Verfahren einen der folgenden Schritte aufweist: (i) Synchronisieren des Entschlüsselungsprozesses als Reaktion auf den in der Synchronisationsnachricht empfangenen Synchronisierungswert; (ii) Synchronisieren des Entschlüsselungsprozesses als Reaktion auf einen in einer früheren Synchronisationsnachricht empfangenen Synchronisierungswertes; (iii) Vergleichen des Synchronisierungswertes mit einem erwarteten Synchronisierungswert und Synchronisieren des Entschlüsselungsprozesses als Reaktion auf den Vergleich; und (iv) Synchronisieren des Entschlüsselungsprozesses als Reaktion auf einen Flywheel-Prozess des Synchronisierungswertes.

5. Verfahren nach einem der vorhergehenden Ansprüche, wobei die Ersatzbetriebsartanzeige ein hörbares Warnsignal umfasst.

6. Verfahren nach einem der vorhergehenden Ansprüche, wobei der Ersatzbetriebsartanzeiger auf einem Display der Kommunikationseinheit zur Verfügung gestellt wird, die den Empfänger beinhaltet.

7. Verfahren nach einem der vorhergehenden Ansprüche, wobei die Ersatzbetriebsart eine erste Betriebsart und eine zweite Betriebsart umfasst, und wobei das Verfahren weiterhin den Schritt aufweist, dass ein Nutzer zwischen der ersten und der zweiten Betriebsart auswählt.

8. Verfahren nach Anspruch 7, wobei die erste Betriebsart umfasst, das entschlüsselte Signal auszugeben, und die zweite Betriebsart umfasst, das entschlüsselte Signal zu unterdrücken.

9. Verfahren nach Anspruch 7 oder 8, wobei die erste Betriebsart umfasst, einen Synchronisierungsfehleranzeige auszugeben und die zweite Betriebsart umfasst, keine Synchronisierungsfehleranzeige auszugeben.

10. Verfahren nach einem der Ansprüche 7 bis 9, wobei die erste Betriebsart umfasst, den Entschlüsselungsprozess als Reaktion auf den Synchronisierungswert zu synchronisieren, und die zweite Betriebsart umfasst, den Entschlüsselungsprozess nicht in Reaktion auf den Synchronisierungswert zu synchronisieren.

11. Verfahren nach einem der Ansprüche 7 bis 10, wobei der Schritt des Auswählens umfasst, zwischen der ersten und der zweiten Betriebsart als Reaktion auf ein Charakteristikum der verschlüsselten Nachricht auszuwählen.

12. Verfahren nach Anspruch 11, wobei das Charakteristikum der verschlüsselten Mitteilung eine Identität des Senders der verschlüsselten Mitteilung ist.

13. Verfahren nach Anspruch 11, wobei das Charakteristikum der verschlüsselten Mitteilung eine mit der verschlüsselten Mitteilung assoziierte Call-Group ist.

14. Verfahren nach einem der vorhergehenden Ansprüche, wobei die Synchronisierungsnachricht weiterhin einen Entschlüsselungsschlüsselparameter aufweist und das Verfahren den Schritt zum Bestimmen eines Entschlüsselungsschlüssels für den Entschlüsselungsprozess als Reaktion auf einen Entschlüsselungsschlüsselparameter umfasst, der in einer früheren Synchronisationsnachricht empfangen wurde.

15. Verfahren nach einem der vorhergehenden Ansprüche, wobei die Synchronisationsnachricht weiterhin einen Entschlüsselungsalgorithmusparameter aufweist und das Verfahren den Schritt zum Bestimmen eines Entschlüsselungsalgorithmus für den Entschlüsselungsprozess als Reaktion auf einen Entschlüsselungsalgorithmusparameter aufweist, der einer früheren Synchronisationsnachricht empfangen wurde.

16. Verfahren nach einem der vorhergehenden Ansprüche, wobei das Kommunikationssystem ein zellulares Kommunikationssystem ist, das in Übereinstimmung mit TETRA-Standards arbeitet.

17. Verfahren nach Anspruch 16, das die Synchronisierung des Entschlüsselungsprozesses in Übereinstimmung mit einem Synchronisierungsprozess von ETSI (European Telecommunication Standards Institute) Technical Specification EN 302 109 v1.1.1 aufweist.

18. Empfänger (106) für ein Kommunikationssystem, wobei der Empfänger aufweist:
Empfangsmittel (107) zum Empfangen einer verschlüsselten Mitteilung;
Mittel zum Empfangen (107, 109) einer Synchronisierungsnachricht, die Daten mit einem Synchronisierungswert aufweist, und eines Synchronisierungsverifizierungs-Prüfsummenwertes;
Mittel zum Entschlüsseln (113) der empfangenen verschlüsselten Mitteilung in Übereinstimmung mit einem Entschlüsselungsprozess unter Verwendung des Synchronisierungswertes zum Erzeugen eines entschlüsselten Signals;
Mittel zum Ausgeben (115) des entschlüsselten Signals;
Mittel zum Erhalten eines Synchronisierungsverifizierungs-Prüfsummenwertes aus der Synchronisierungsnachricht, wobei der Prüfsummenwert von der Synchronisierungsnachricht abhängt und optional von der Sendezeit der Übertragung der Synchronisierungsnachricht abhängt;
Mittel zum Berechnen (106) einer lokalen Prüfsumme für die empfangene Synchronisierungsnachricht unter Verwendung eines Echtzeittaktes des Empfänger; und
Mittel zum Vergleichen (106) der lokalen Prüfsumme mit dem erhaltenen Synchronisierungsverifizierungs-Prüfsummenwert, um zu bestimmen, ob eine Übereinstimmung vorliegt;
**dadurch gekennzeichnet,**
**dass** der Empfänger (106) so betreibbar ist, dass, wenn keine Prüfsummenübereinstimmung vorliegt, er in eine Ersatzbetriebsart eintritt, wobei der Entschlüsselungsprozess fortgesetzt wird und die Ausgabe des entschlüsselten Signals im Wesentlichen ohne Unterbrechung fortgesetzt wird, um für einen Nutzer eine Anzeige zu erzeugen und zur Verfügung zu stellen, wonach sich der Empfänger in einer Ersatzbetriebsart befindet.

## Revendications

1. Procédé de réception d'une communication cryptée dans un récepteur d'un système de communication, le procédé comprenant les étapes qui consistent à :
recevoir une communication cryptée à décrypter ;
recevoir (205) un message de synchronisation qui comprend une valeur de synchronisation afin de permettre à un processus de décryptage d'être synchronisé avec un processus de cryptage qui a été utilisé pour crypter la communication, et une valeur de somme de contrôle de vérification de synchronisation ;
décrypter (201) la communication cryptée selon un processus de décryptage à l'aide de la valeur de synchronisation afin de générer un signal décrypté ;
transmettre (203) le signal décrypté ;
obtenir, à partir du message de synchronisation, la valeur de somme de contrôle de vérification de synchronisation, ladite valeur de somme de contrôle dépendant du message de synchronisation et dépendant optionnellement d'une durée de transmission du message de synchronisation ; et
calculer une valeur de somme de contrôle locale pour le message de synchronisation reçu à l'aide d'une horloge en temps réel du récepteur, et comparer (207) cette valeur avec la valeur de somme de contrôle de vérification de synchronisation obtenue de façon à déterminer si il y a correspondance ou non ; et **caractérisé par** ce qui suit :
si aucune correspondance de somme de contrôle n'est obtenue, le passage (211) à un mode de fonctionnement de secours, avec lequel le processus de décryptage est poursuivi, et la transmission du signal décrypté est poursuivie sensiblement sans interruption, et une indication est générée par le récepteur et fournie à un utilisateur, selon laquelle le récepteur est en mode de secours.

2. Procédé selon la revendication 1, dans lequel l'indication signale à l'utilisateur du récepteur que la communication ne peut être sécurisée, ou peut signaler que la communication peut être une attaque par replay.

3. Procédé selon la revendication 1, dans lequel la valeur de somme de contrôle de vérification de synchronisation est obtenue par calcul à partir des données du message de synchronisation.

4. Procédé selon l'une quelconque des revendications 1 à 3, dans lequel le procédé comprend l'une des étapes suivantes : (i) la synchronisation du processus de décryptage en réponse à la valeur de synchronisation reçue dans le message de synchronisation ; (ii) la synchronisation du processus de décryptage en réponse à une valeur de synchronisation reçue dans un message de synchronisation antérieur ; (iii) la comparaison de la valeur de synchronisation avec une valeur de synchronisation prévue, et la synchronisation du processus de décryptage en réponse à la comparaison ; et (iv) la synchronisation du processus de décryptage en réponse à un processus à effet de volant de la valeur de synchronisation.

5. Procédé selon l'une quelconque des revendications précédentes, dans lequel l'indication de mode de secours comprend un signal d'avertissement sonore.

6. Procédé selon l'une quelconque des revendications précédentes, dans lequel l'indication de mode de secours est fournie sur un écran d'une unité de communication à laquelle le récepteur est inclus.

7. Procédé selon l'une quelconque des revendications précédentes, dans lequel le mode de secours comprend un premier mode de fonctionnement et un second mode de fonctionnement, le procédé comprenant en outre l'étape qui consiste en ce qu'un utilisateur choisit entre le premier et le second mode de fonctionnement.

8. Procédé selon la revendication 7, dans lequel le premier mode de fonctionnement comprend la transmission du signal décrypté et le second mode de fonctionnement comprend la suppression du signal décrypté.

9. Procédé selon la revendication 7 ou 8, dans lequel le premier mode de fonctionnement comprend la transmission d'une indication d'erreur de synchronisation, et le second mode de fonctionnement comprend la non-transmission d'une indication d'erreur de synchronisation.

10. Procédé selon l'une quelconque des revendications 7 à 9, dans lequel le premier mode de fonctionnement comprend la synchronisation du processus de décryptage en réponse à la valeur de synchronisation, et le second mode de fonctionnement comprend la non-synchronisation du processus de décryptage en réponse à la valeur de synchronisation.

11. Procédé selon l'une quelconque des revendications 7 à 10, dans lequel l'étape de choix comprend le choix entre le premier et le second mode de fonctionnement en réponse à une caractéristique de la communication cryptée.

12. Procédé selon la revendication 11, dans lequel la caractéristique de la communication cryptée est une identité d'un émetteur de la communication cryptée.

13. Procédé selon la revendication 11, dans lequel la caractéristique de la communication cryptée est un groupe d'appels associé à la communication cryptée.

14. Procédé selon l'une quelconque des revendications précédentes, dans lequel le message de synchronisation comprend en outre un paramètre de clé de décryptage, le procédé comprenant l'étape qui consiste à déterminer une clé de décryptage pour le processus de décryptage en réponse à un paramètre de clé de décryptage reçu dans un message de synchronisation antérieur.

15. Procédé selon l'une quelconque des revendications précédentes, dans lequel le message de synchronisation comprend en outre un paramètre d'algorithme de décryptage, le procédé comprenant l'étape qui consiste à déterminer un algorithme de décryptage pour le processus de décryptage en réponse à un paramètre d'algorithme de décryptage reçu dans un message de synchronisation antérieur.

16. Procédé selon l'une quelconque des revendications précédentes, dans lequel le système de communication est un système de communication cellulaire qui fonctionne selon les normes TETRA.

17. Procédé selon la revendication 16, qui comprend la synchronisation du processus de décryptage selon un processus de synchronisation de la spécification technique EN 302 109 v1.1.1 de l'ETSI (European Telecommunication Standards Institute).

18. Récepteur (106) destiné à un système de communication, le récepteur comprenant :
un moyen de réception (107) destiné à recevoir une communication cryptée ;
un moyen de réception (107, 109) d'un message de synchronisation qui comprend des données qui comprennent une valeur de synchronisation, et une valeur de somme de contrôle de vérification de synchronisation ;
un moyen de décryptage (113) de la communication cryptée reçue, selon un processus de décryptage qui utilise la valeur de synchronisation afin de générer un signal décrypté ;
un moyen de transmission (115) du signal décrypté ;
un moyen d'obtention, à partir du message de synchronisation, de la valeur de somme de contrôle de vérification de synchronisation, ladite valeur de somme de contrôle dépendant du message de synchronisation et dépendant optionnellement de la durée de transmission du message de synchronisation ;
un moyen de calcul (106) d'une somme de contrôle locale pour le message de synchronisation reçu, à l'aide d'une horloge en temps réel du récepteur ; et
un moyen de comparaison (106) de la somme de contrôle locale avec la valeur de somme de contrôle de vérification de synchronisation, afin de déterminer si il y a correspondance ou non ;
et **caractérisé en ce que** :
le récepteur (106) est capable, si aucune correspondance n'est obtenue, de passer en mode de secours, avec lequel le processus de décryptage est poursuivi, et la transmission du signal décrypté est poursuivie sensiblement sans interruption, afin de générer et de fournir une indication à un utilisateur, selon laquelle le récepteur est en mode de secours.
